# EUROPEAN PATENT APPLICATION

(11) **EP 1 231 170 A1**
(43) Date of publication of application: **14.08.2002**
(21) Application number: 02002588.8
(22) Date of filing: 05.02.2002
(51) Int. Cl.: B65G 61/00

(54) **Machine for the supply of empty cardboard boxes**

(30) Priority: 13.02.2001 IT BO010074
(71) Applicant: SENZANI BREVETTI - OFFICINE DI FAENZA S.r.l., I-48018 Faenza (Ravenna) (IT)
(72) Inventor: Quadalti, Cesare, 48018 Faenza, Province of Ravenna (IT)
(74) Representative: Porsia, Dino, Dr.

(57) **Abstract**

Motorized roller trains (14, 15) on two levels, each with a corresponding roller lifting platform (314, 315) at the end, provided for moving, respectively, the pallets for the full boxes (CC) and empty boxes (C) and the corresponding empty pallets (Z), are located side by side and parallel to each other, so that they can easily be served by a single fork-lift truck. The manipulating robot (12) which places the full and closed boxes (CC) on the appropriate pallet (Z) takes an empty box cyclically from the stack (P) placed on the appropriate pallet and inserts it into the store supplying the packaging machine, in the time intervals between the discharging of the successive boxes. This store (M) can contain a sufficient number of boxes to ensure continuity of operation of the packaging machine during the changing of the pallet carrying the empty boxes. For the same purpose, buffer means (9, 10, 11) are provided to store, during the removal of the pallet loaded with full and closed boxes, a sufficient number of full and closed boxes produced by the packaging machine.

## Description

The invention relates to machines for packaging organized groups of products in cardboard boxes. The most advanced state of the art relating to these machines makes it possible to supply empty boxes automatically, by taking them from stacks on pallets located in the supply store of these machines, which has a small capacity and is sufficient to ensure continuity of operation during the discharge of the empty pallet and its replacement with a new pallet loaded with empty boxes, as it arrives from the paper and cardboard factory where the boxes are produced. In order to ensure that the stacks are stable, in view of the non-uniformly distributed thickness of the flattened boxes, due to the superimposition of the joining edge on one of the side walls, each box of the said stack is rotated through one hundred and eighty degrees with respect to the adjacent ones, so that the stack becomes perfectly straight. The cyclic supply of the pallet with the stacks of empty boxes and the subsequent removal of the empty pallet can be carried out by means of manually operated or wire-guided fork-lift trucks. An example of a method and equipment for this type of automatic supply are described in Italian patent application no. BO98A-699 in the name of the present applicant.

In this field, there is a known method of using a manipulating robot for picking up the closed boxes filled with products as they leave the machine, and for arranging them on a pallet which is supplied cyclically in the empty state and which is subsequently removed in the full state by the said fork-lift truck. If these pallets had to be moved by the fork-lift truck which also moves the pallets carrying the empty boxes, the operation of this fork-lift truck would be complicated, since the two different pallets are positioned in places distant from each other, and sometimes the pallets may be positioned and/or orientated in such a way that they cannot both be reached by one fork-lift truck.

A first object of the invention is to overcome this drawback, to permit simplified and automatic movement of the pallets with the empty boxes as well as those with the full boxes and the corresponding empty pallets. A second object is to simplify the construction of the machine by eliminating the means which would be necessary at present to transfer an empty box in a cyclic way from the supply stack to the operating station of the packaging machine. A further object of the invention is to ensure continuity of operation of the packaging machine during the replacement of the pallet with the empty boxes and the pallet with the full boxes.

These and other objects are achieved with the following idea for a solution. Motorized roller trains on two levels, each with a corresponding roller lifting platform at the end, provided for moving, respectively, the pallets for the full and empty boxes and the corresponding empty pallets, are located side by side and parallel to each other, so that they can easily be served by a single fork-lift truck. The manipulating robot which places the full and closed boxes on the appropriate pallet takes an empty box cyclically from the stack placed on the appropriate pallet and inserts it into the store supplying the packaging machine, in the time intervals between the discharging of the successive boxes. This store can contain a sufficient number of boxes to ensure continuity of operation of the packaging machine during the changing of the pallet carrying the empty boxes. For the same purpose, buffer means are provided to store, during the removal of the pallet loaded with full and closed boxes, a sufficient number of full and closed boxes produced by the packaging machine.

Further characteristics of the invention and the advantages which it provides will be made clearer by the following description of a preferred embodiment of the invention, illustrated purely by way of example, without restrictive intent, in the figures of the two attached sheets of drawings, in which:
- Fig. 1 is a plan view from above of the equipment according to the invention;
- Figs. 2 and 3 show two details of the machine, as seen in the views identified by the lines II-II and III-III in Figure 1;
- Fig. 4 shows details as seen in the section IV-IV in Figure 1.

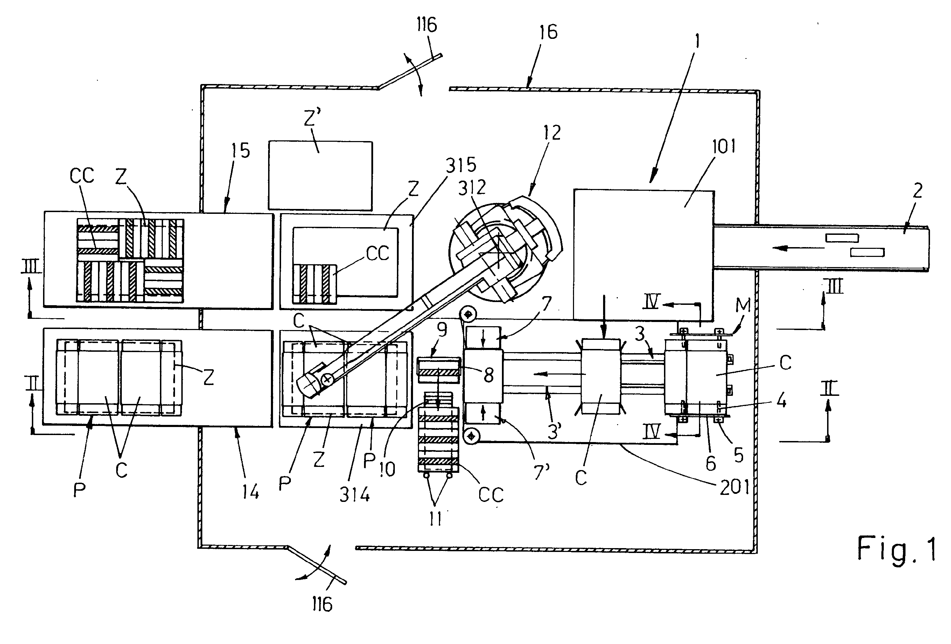

In Figure 1, the number 1 indicates a packaging machine of a known type, having a section 101 for grouping the products supplied to the said section by the conveyor 2. The section 201 adjacent to the section 101 is designed for manipulating and transporting the empty cardboard boxes C, positioned horizontally and orientated transversely with respect to the direction of transport, in such a way that each of them has one open end facing towards the said section 101, so that suitable means can insert the ordered groups of products into the said boxes.

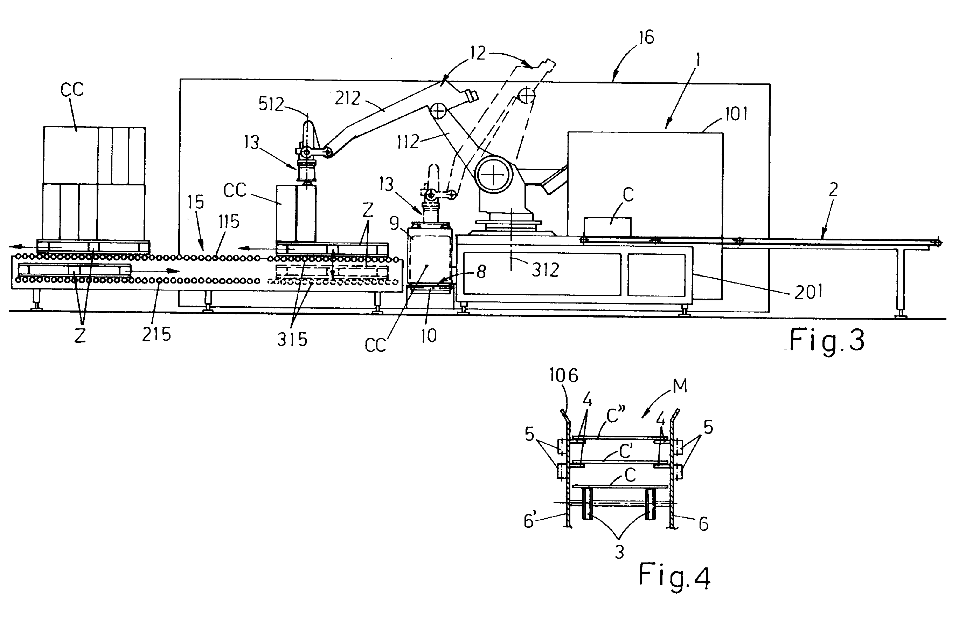

The initial part of the section 201 has a small store M for storing a sufficient quantity of flattened empty boxes for the purposes stated above, the said store being made, for example, as shown in Figure 4. In this figure, the number 3 indicates the first conveyor of the section 201, on which a box C is positioned transversely, and above which there are positioned, parallel to each other and with an exact spacing between them, two or more boxes C', C", supported in their corner areas by levers 4 oscillating on the vertical shafts of corresponding electrically or pneumatically driven rotating actuators 5, fixed by their bodies to the outsides of parallel guiding side pieces 6, 6' of the said store, these side pieces preferably having upper parts 106 which are flared outwards, to provide an entry guide for the introduction of the flattened boxes into the said store. Each box located in the store M, above the one bearing directly on the conveyor 3, is supported by four levers 4 which, on command, oscillate simultaneously through ninety degrees towards the outside, passing through slots formed in the side pieces 6, in such a way that they release the said box, which falls to the lower level.

In the section 201 of the machine, the boxes are opened by known means, the organized group of products is introduced into them, and the lateral flaps of the said boxes are then first folded shut and then fixed by the application of adhesive strips supplied by units of a known type 7, 7', for example units with highly independent operation, which can be re-supplied with strips while the machine is moving and which are provided with means of automatically joining the strips, such as those described in Italian patent application BO99A-34 in the name of the present applicant.

At the output end of section 201 of the machine 1, the full and closed boxes CC are preferably placed on a device 8, oscillating on an axis which is horizontal and parallel to the longitudinal axis of the composite conveyor 3, 3' of the said section 201, which rotates the said boxes through ninety degrees in such a way that they are positioned with their closing flaps at the top and bottom. A pusher 9, associated with the turnover device 8 for example, transfers the boxes CC from this device to a roller train 10, horizontal and orthogonal to the conveyor 3, 3', and the said boxes, by the action of successive pushes of the member 9 or by the action of a motor drive of the roller train 10, reach the end of this roller train, against stop means 11. The length of the roller train 10 is such that the boxes CC are stored in a sufficient quantity for the purposes stated above.

At the sides of section 201 and section 101 of the packaging machine 1, there is provided a manipulating robot 12 which comprises an arm 112 and a forearm 212 which rotate at their base about a vertical axis 312 and which also carry the wrist pivot 412, a manipulating head 13 with suction means, which, by suitable means, has its axis kept constantly vertical and has its said gripping means 13 kept constantly horizontal. The head 13 is supported by the wrist of the robot in such a way that it can rotate, when commanded, about a vertical axis 512.

A motorized roller train 14 is placed with its longitudinal axis in alignment with the longitudinal axis of the conveyor 3 of the packaging machine, and has two conveyor levels, one above the other, running in opposite directions, indicated by 114 and 214, this roller train being designed to control the pallets Z carrying the stacks P of flattened empty boxes as they arrive from the producing paper and cardboard factory, which has produced the boxes. At the terminal part of the roller train 14 there is a lifting platform with motorized rollers 314, which, on command, can be aligned with the upper conveyor track 114 or with the lower conveyor track 214 of the said roller train 14.

A similar roller train 15 is provided at the side of and parallel to the roller train 14, and has two conveyor levels, one above the other, running in opposite directions, indicated by 115 and 215, this roller train being designed to control the pallets Z carrying the full and closed boxes produced by the aforesaid packaging machine. At the terminal part of the roller train 15 there is another lifting platform with motorized rollers 315, which, on command, can be aligned with the upper or lower level of the said roller train 15.

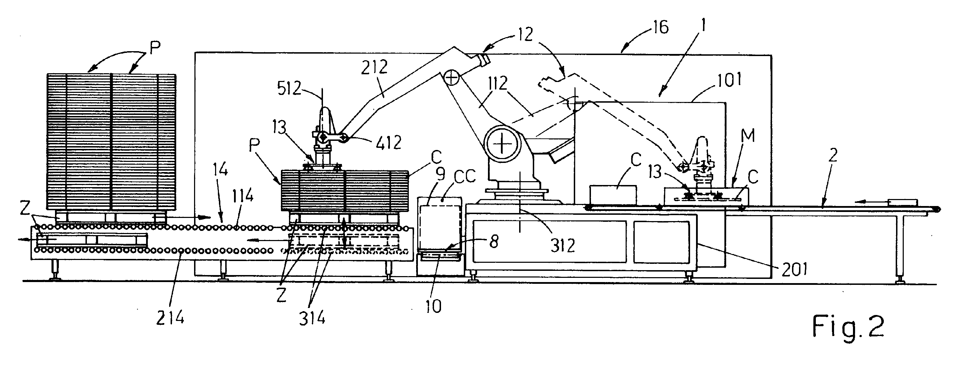

The roller trains 14 and 15 operate in opposite ways. The roller train 14 cyclically receives a pallet Z carrying stacks of empty boxes, by means of the upper conveyor track 114 which is activated at the correct time to transfer the said full pallet to the lifting platform 314 in the high position shown in Figure 2. A subsequent pallet Z loaded with empty boxes can then be fed onto the said upper track of the roller train 14, to reduce the successive periods of time required to transfer the said pallet onto the said roller train 314. While the full pallet Z is being fed onto the roller train 314, the packaging machine continues to operate, using the empty boxes stored previously in the store M, which will be empty or almost empty at the start of the next operating cycle. The gripping head 13 of the manipulating robot 12, suitably programmed for the purpose, takes an empty box cyclically from both of the stacks P arranged on the pallet Z placed on 314, and transfers them into the store M, thus progressively replenishing it. If necessary, the gripping head 13 rotates the box during its transfer to the store M, in such a way that the said box is always correctly orientated with respect to the direction of advance of the first conveyor 3 of the packaging machine 1. The robot 12 is programmed and is provided with optoelectronic sensors which enable it to progressively decrease the downward movement towards the stacks of empty boxes located on the pallet Z, to match the decreasing height of the said stacks P.

When the empty boxes have been removed from the pallet Z, the platform 314 is lowered to the level of the lower conveyor track 114, and the rollers of these parts are activated to make the empty pallet Z reach the initial part of the said track 114, under the full pallet Z, in such a way that it can be removed by the fork-lift truck which is provided for the supply of the pallets loaded with empty boxes. In the next step, the platform 314 returns to the high position for the execution of a new operating cycle.

On the other hand, the roller track 15 receives the empty pallets Z at the end of the lower track 215 which is activated to transfer the said pallet to the lifting platform 315, which is now in the low position and is also active for receiving the same pallet. In the next step, the platform 315 rises and becomes coplanar with the upper conveyor track 115, while a new empty pallet is then placed on the said conveyor track 115, to reduce the downtime due to its subsequent transfer to the lifting platform. The pallet carried to the high position by the platform 315 is loaded with the full boxes CC which leave the packaging machine and which are taken by the said gripping head 13 of the manipulating robot 12 from the terminal part of the small roller track 10, and the frequency of operation of the robot is such that only one box CC is positioned on the said roller track 10 in a cyclic way. The periods of time required to remove the full and closed boxes are such that, in the intervals between them, the robot 12 is also able to supply the empty boxes to the store M.

On completion of the loading of the pallet on the platform 315, while the full boxes CC are accumulating on the conveyor 10, the said platform 315 activates its rollers at the same time as the activation of the upper conveyor track 115, and the pallet Z with the full boxes is transferred to the initial part of the said track 115, in a suitable position to be picked up and removed by the said fork-lift truck which will place a subsequent empty pallet on the lower conveyor track 215.

Clearly, the times for loading and unloading the roller trains 14 and 15 are such that both can be served by the same fork-lift truck.

In Figure 1, the number 16 indicates a protective enclosure or cabin, which surrounds the equipment according to the invention, which is provided with service hatches 116 and which is designed so that the product conveyor 2 and the roller trains 14 and 15 pass through it. Inside this protective enclosure, a pallet Z', on which the manipulating robot 12 can place any production waste from the packaging machine 1, is provided at a short distance from one of its sides and at the side of the roller train 15, and rests on the ground or on a small service roller train which is not illustrated.

## Claims

1. Machine for automating the supply of empty cardboard boxes taken from stacks on pallets, for automating the discharge and placing on pallets of full and closed boxes, and for ensuring continuity of operation of the packaging machines during the replacement of the empty pallets and those loaded with boxes, **characterized in that** it comprises:
- First means (14) for cyclically supplying to the location of the packaging machine (1) a pallet (Z) carrying one or more stacks (P) of flattened empty boxes (C), and for subsequently removing the pallet after the said boxes have been removed from it;
- Second means (15) for cyclically supplying to the location of the packaging machine (1) an empty pallet (Z) to be loaded with the full and closed boxes (CC) discharged by the said machine, and means for removing the pallet (Z) loaded with these boxes;
- A manipulating robot (12) with a gripping head (13) provided with suction means, programmed to take a flattened empty box in a cyclic way from the stacks (P) of the said first supply means (14) and to transfer it to the box supply station of the packaging machine, the said gripping head of the said robot also being designed and programmed to grip, as an alternative to the empty boxes, the full and closed boxes (CC) discharged by the said machine (1), and to arrange them on the pallet (Z) present in the said second supply means (15);
- A small store (M) for storing a quantity of empty boxes (C) in the box supply station of the packaging machine (1), to ensure continuity of operation of the packaging machine during the replacement of the empty pallet with one provided with new stacks of flattened empty boxes;
- A small store (10, 11) for storing a small quantity of full and closed boxes (CC) discharged by the packaging machine (1), to ensure continuity of operation of the packaging machine even during the removal of the pallet loaded with boxes (CC) and its replacement with a new empty pallet.

2. Machine according to Claim 1), in which the said first means for supplying the pallet (Z) with the stacks (P) of flattened empty boxes comprise a motorized horizontal roller train (14) having two conveyor tracks, one above the other, running in opposite directions (114, 214), of which the upper one is used to convey the loaded pallets, while the lower one is used to convey the empty pallets, the terminal part of this roller train being provided with a lifting platform (314) with its own motorized rollers, which, on command, can be aligned with the upper conveyor track (114) to receive the loaded pallet, or with the lower conveyor track (214) to discharge the empty pallet.

3. Machine according to Claim 1), in which the second means (15) for supplying the pallets (Z) with the full and closed boxes (CC) comprise a motorized horizontal roller train (15) having two conveyor tracks, one above the other, running in opposite directions (115, 215), of which the lower one (215) is used to supply the empty pallets, while the upper one (115) is used to discharge the loaded pallets, the terminal part of this roller train being provided with a lifting platform (315) with its own motorized rollers, which, on command, can be aligned with the lower conveyor track (215) to receive the empty pallet, or with the upper conveyor track (115) to prepare the pallet for reloading and then to transfer the loaded pallet to the said discharge track.

4. Machine according to the preceding claims, in which the said first and second roller trains (14, 15) are positioned side by side and parallel to each other, with the lifting platforms (314, 315) placed side by side and at a short distance from the packaging machine (1) and from the manipulating robot (12), in such a way that they can easily be served by the latter device, while the opposite ends of the said roller trains (14, 15) are also positioned at a short distance from each other, in such a way that they can conveniently be served by a single fork-lift truck.

5. Machine according to Claim 4), in which the first and second roller trains (14, 15) are positioned with their longitudinal axes parallel to the longitudinal axis of the conveyor (3, 3') of the packaging machine (1) and the lifting platforms (314, 315) of the said roller trains are positioned in the proximity of the discharge station of the said packaging machine (1).

6. Machine according to Claim 5), in which the manipulating robot (12) is positioned at one side of the discharge station of the packaging machine and at a short distance from the lifting platform (315) of the said second motorized roller train (15).

7. Machine according to Claim 1), in which the manipulating robot (12) is, for example, of the type having an arm and a forearm, with rotation at the base about a vertical axis and with a wrist which supports the gripping head (13) with the possibility of rotation on command about a vertical axis, to enable the full boxes to be orientated in different ways on the pallet to be loaded and to enable the flattened empty box (C) to be correctly orientated at all times in the store (M) supplying the packaging machine.

8. Machine according to Claim 1), in which the store (M) for storing a small quantity of flattened empty boxes at the station for supplying these to the packaging machine (1) acts in such a way that the boxes are positioned parallel to each other on the corresponding parking levels, already in the transverse position and with the correct orientation for placing by gravity on the underlying conveyor (3) of the said packaging machine, the said parking levels being formed by horizontal fingers or levers (4) carried by corresponding actuators (5) fixed to side pieces (6) located laterally on the said conveyor, and means being provided for the selective activation of the said actuators, to make the boxes pass from a parking level to the underlying level or directly onto the conveyor (3) for supplying the packaging machine.

9. Machine according to Claim 8), in which the horizontal withdrawable levers (4) which form the parking levels for the boxes in the store (M) for supplying the packaging machine (1) are fixed to the vertical rotation shafts of rotating actuators (5), which, when activated, cause the said levers to be withdrawn through slots formed in the side pieces (6) which support the said actuators.

10. Machine according to Claim 8), in which the side pieces (6) of the store (M) for supplying the boxes to the packaging machine (1) are outwardly flared at the top to form an entry guide (106).

11. Machine according to Claim 1), in which the full and closed box (CC) leaving the packaging machine is picked up by a device (8) which rotates it through ninety degrees about the preceding direction of advance, in such a way that the closing flaps of the said box are at the top and bottom, means of the pusher type, for example, (9) being provided to transfer the rotated box on to a neighbouring horizontal conveyor (10) which is orthogonal to the longitudinal axis of the packaging machine and which consists, for example, of a roller train whose length is such that it can hold a sufficient quantity of full and closed boxes (CC) to permit continuity of operation of the said packaging machine even during the removal of the pallet loaded with full boxes by the corresponding lifting platform (315), and means (11) being provided to stop the said boxes in the terminal part of the said roller train, these means being used as the zero reference for the cyclic pick-up of the full boxes by the manipulating robot (12).

12. Equipment according to the preceding claims, **characterized in that** it is surrounded by a protective enclosure or cabin (16) with service hatches (116), which is designed so that the conveyor (2) of the products to be packaged and the motorized roller trains (14, 15) for carrying the pallets with the empty or full boxes and the empty pallets can pass through it.
